# EUROPEAN PATENT SPECIFICATION

(11) **EP 3 546 814 B1**
(45) Date of publication and mention of the grant of the patent: **21.10.2020**
(21) Application number: 19160250.7
(22) Date of filing: 23.03.2018
(51) Int. Cl.: F16L 37/098, F16L 37/133, F16L 25/00

(54) **GARDENING FLUID CONNECTION DEVICE**
GARTENFLUIDVERBINDUNGSVORRICHTUNG
DISPOSITIF DE CONNEXION FLUIDIQUE DE JARDINAGE

(43) Date of publication of application: 02.10.2019
(62) Divisional of application: 18163691.1
(73) Proprietor: Yuan Mei Corp., Chang Hua Hsien (TW)
(72) Inventor: LO, Shun-nan, Chang Hua Hsien (TW)
(74) Representative: Straus, Alexander

(56) References cited:
- DE-U1-202006 019 127
- US-A1- 2008 238 087
- US-A1- 2012 319 401
- US-B1- 7 021 669

## Description

### TECHNICAL FIELD

The present disclosure relates to a gardening fluid connection device which is employed to connect with a water spray gun, a sprinkler or a water hose.

### BACKGROUND

A conventional gardening fluid connection device, such as disclosed in TW Patent Nos. 260238, 532442, 11319072 and US Patent No. 7021669, is employed to connect with a water supply device (e.g., a water spray gun, a sprinkler, or a water hose). The conventional gardening fluid connection device contains a fitting sleeve reciprocatingly rotated leftward or rightward so as to open or close the conventional gardening fluid connection device. When the fitting sleeve is stopped after being rotated, the user knows the conventional gardening fluid connection device is located on an opening position or a closing position. Alternatively, the user knows the conventional gardening fluid connection device is located on the opening position or the closing position after pressing the fitting sleeve. Furthermore, a conventional gardening fluid connection device such as disclosed in US Patent No. 7021669 contains an L-shaped depression defined in the fitting sleeve so that the stop rib of the fitting sleeve slides in a stopping face of the depression when being rotated to the closing position or the opening position, hence the conventional gardening fluid connection device is not positioned.

US 7 021 669 B1 discloses a coupling part for a fluid coupling device which has a locking device switchable between two positions

US 2008/238087 A1 discloses a fluid connector for garden use, which is made up of a tube body, a resilient retainer and sleeve.

DE 20 2006 019127 U1 discloses an adapter comprising a main body having a stop ring with a recess which interacts with a protrusion of a fixing sleeve.

US 2012/319401 A1 discloses a water pipe connector apparatus with a main body and a sleeve.

### SUMMARY

The present invention provides a gardening fluid connection device according to claim 1.

A primary aspect of the present invention is to provide a gardening fluid coupling device which is opened or closed easily by way of the stop rib and each locking element of the body, each spaced engagement tooth of the fitting sleeve, and the resilient element.

Another aspect of the present invention is to provide a gardening fluid coupling device in which each locking element rotates from a first side of each spaced engagement tooth toward the second side of each spaced engagement tooth, wherein each spaced engagement tooth is pushed by the resilient element to contact with the stop rib and each locking element of the body and to rotate toward the second side of each spaced engagement tooth, and each locking element rotates to the second side of each spaced engagement tooth, such that it is easy to distinguish whether the gardening fluid coupling device is opened or closed.

In an aspect, a gardening fluid connection device comprises a body on which multiple retainers are retained, a resilient element, and a fitting sleeve which are fitted on a first end of the body. The fitting sleeve includes multiple spaced engagement teeth and the resilient element abuts against the body and the fitting sleeve. Also, the fitting sleeve rotates along the body reciprocatingly and pushes the resilient element so as to open or close the gardening fluid coupling device, hence the multiple retainers of the body are removed or retained when the fitting sleeve presses the resilient element or is pushed by the resilient element so that the multiple retainers of the body connect with or remove from a water spray gun or a sprinkler. The body includes a stop rib arranged thereon so that the multiple spaced engagement teeth of the fitting sleeve are pushed by the resilient element to abut against the stop rib of the body. The body also includes at least one locking element formed inside the stop rib, wherein each locking element is located on a first side of each spaced engagement tooth, and wherein a width of each spaced engagement tooth is equal to a rotation distance of the fitting sleeve, such that the fitting sleeve is rotated reciprocatingly so as to open or close the gardening fluid coupling device by way of the stop rib and each locking element of the body, each spaced engagement tooth of the fitting sleeve, and the resilient element. Further, each locking element is stopped when moving to a second side of each spaced engagement tooth.

In another aspect, a gardening fluid connection device comprises a body on which multiple retainers are retained, a resilient element, and a fitting sleeve which are fitted on a first end of the body. The fitting sleeve includes multiple spaced engagement teeth and the resilient element abuts against the body and the fitting sleeve. Also, the fitting sleeve rotates along the body reciprocatingly and pushes the resilient element so as to open or close the gardening fluid coupling device, hence the multiple retainers of the body are removed or retained when the fitting sleeve presses the resilient element or is pushed by the resilient element so that the multiple retainers of the body connect with or remove from a water spray gun or a sprinkler. The body further includes at least one retaining element, and the fitting sleeve further includes at least one shoulder respectively located above and contacting with the retaining element so as to maintain the fitting sleeve on a closing position and not press downward when the fitting sleeve rotates to an opening position. The shoulder removes from the retaining element of the body so that the fitting sleeve presses the resilient element to release the multiple retainers, and the multiple retainers connect with or remove from the water spray gun or the sprinkler.

In yet another aspect, a gardening fluid connection device comprises a body on which multiple retainers are retained, a resilient element, and a fitting sleeve which are fitted on a first end of the body. The fitting sleeve includes multiple spaced engagement teeth and the resilient element abuts against the body and the fitting sleeve. Also, the fitting sleeve rotates along the body reciprocatingly and pushes the resilient element so as to open or close the gardening fluid coupling device, hence the multiple retainers of the body are removed or retained when the fitting sleeve presses the resilient element or is pushed by the resilient element so that the multiple retainers of the body connect with or remove from a water spray gun or a sprinkler. The body includes a stop rib arranged thereon so that the multiple spaced engagement teeth of the fitting sleeve are pushed by the resilient element to abut against the stop rib of the body. The body also includes at least one locking element formed inside the stop rib, wherein each locking element is located on a first side of each spaced engagement tooth, and wherein a width of each spaced engagement tooth is equal to a rotation distance of the fitting sleeve, such that the fitting sleeve is rotated reciprocatingly, and each locking element rotates from a first side of each spaced engagement tooth toward the second side of each spaced engagement tooth. The body further includes at least one retaining element, and the fitting sleeve further includes at least one shoulder respectively located above and contacting with the one or more than one retaining element so as to maintain the fitting sleeve on a closing position and not press downward when the fitting sleeve rotates to an opening position. The shoulder removes from the one or more than one retaining element of the body so that the fitting sleeve presses the resilient element to release the multiple retainers, and the multiple retainers connect with or remove from the water spray gun or the sprinkler.

Other objects and features will be in part apparent and in part pointed out hereinafter.

### BRIEF DESCRIPTION OF THE DRAWINGS

FIG. 1 is a perspective view showing exploded components of a gardening fluid coupling device according to an embodiment of the present invention.
FIG. 2 is a perspective view showing the assembly of the gardening fluid coupling device of FIG. 1.
FIG. 3 is a cross sectional view showing the assembly of the gardening fluid coupling device of FIG. 1.
FIG. 4 is a perspective view of a fitting sleeve of the gardening fluid coupling device of FIG. 1 having a portion cut away.
FIG. 5 is a perspective view showing the operation of the gardening fluid coupling device of FIG. 1, including the fitting sleeve of FIG. 4.
FIG. 6 is a perspective view showing the operation of the gardening fluid coupling device of FIG. 1, including an enlarged portion thereof.
FIG. 7 is another perspective view showing the operation of the gardening fluid coupling device of FIG. 1, including the fitting sleeve of FIG. 4.
FIG. 8 is another perspective view showing the operation of the gardening fluid coupling device of FIG. 1, including an enlarged portion thereof.
FIG. 9 is also another perspective view showing the operation of the gardening fluid coupling device of FIG. 1, including an enlarged portion thereof.
FIG. 10 is also another cross-sectional perspective view showing the operation of the gardening fluid coupling device of FIG. 1, including the fitting sleeve of FIG. 4.

Corresponding reference characters indicate corresponding parts throughout the drawings.

### DETAILED DESCRIPTION

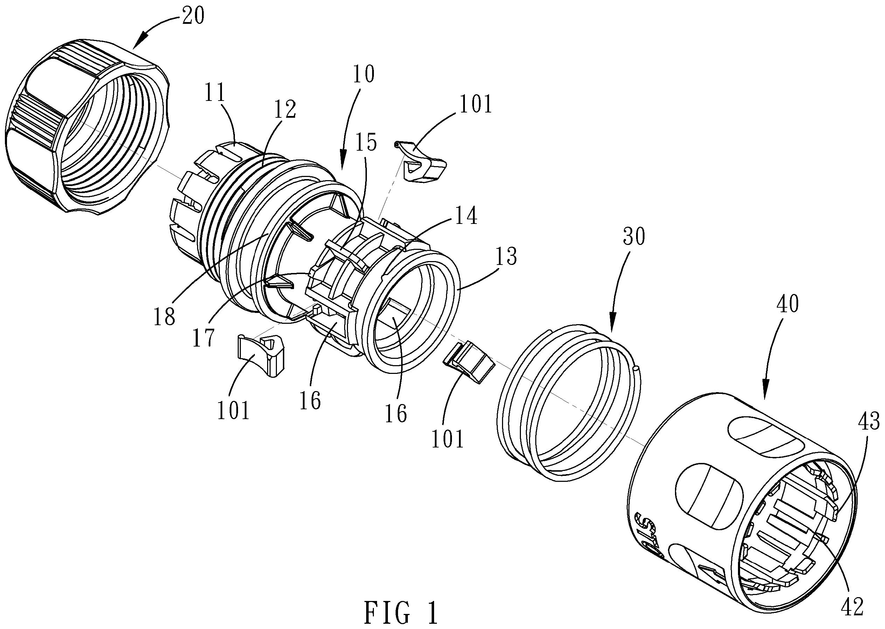

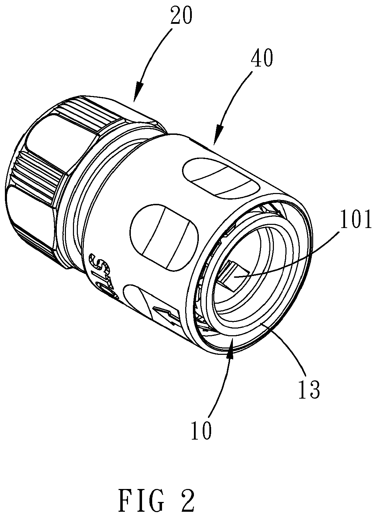

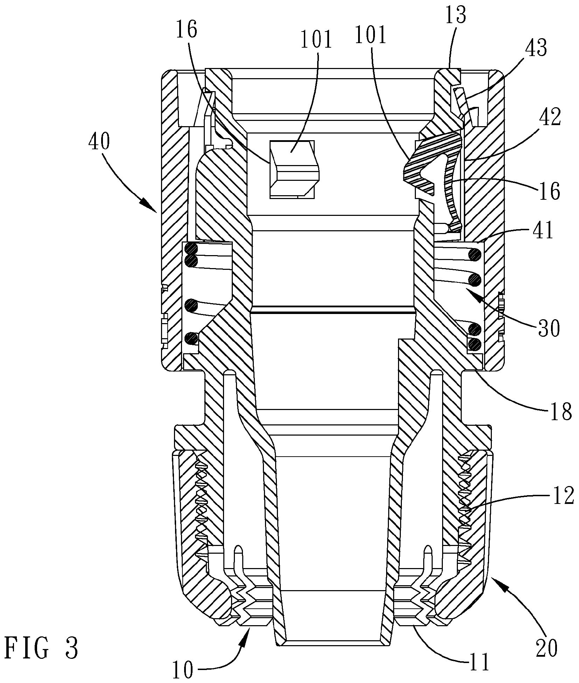

With reference to FIGS. 1 to 3, a gardening fluid connection device according to a preferred embodiment of the present invention comprises: a body 10 on which multiple retainers 101 are retained, a screwing sleeve 20 mounted on a first end of the body 10 and configured to connect with a water hose, a resilient element 30, and a fitting sleeve 40, which are fitted with a second end of the body 10 The resilient element 30 and the fitting sleeve 40 abut against each other so that the fitting sleeve 40 rotates along the body 10 reciprocatingly and pushes the resilient element 30 so as to open or close of the gardening fluid coupling device, hence the multiple retainers 101 of the body 10 are removed or retained when the fitting sleeve 40 presses the resilient element 30 or is pushed by the resilient element 30 so that the multiple retainers 101 of the body 10 connect with or remove from a water supply device, such as a water spray gun or a sprinkler. The body 10 includes multiple flexible teeth 11 arranged on the first end thereof, a threaded section 12 formed inside the multiple flexible teeth 11 and configured to screw with the screwing sleeve 20, a stop rib 13 arranged on the second end of the body 10, one or more than one locking element 14 (i.e., each locking element 14 is a boss) formed inside the stop rib 13, multiple limitation elements 15 arranged inside the one or more than one locking element 14 and away from the stop rib 13, and multiple spaced orifices 16 configured to accommodate the multiple retainers 101 respectively and located adjacent to the stop rib 13. In this embodiment, each of the multiple limitation elements 15 is defined between any two of the multiple spaced orifices 16 and is an extending rib.

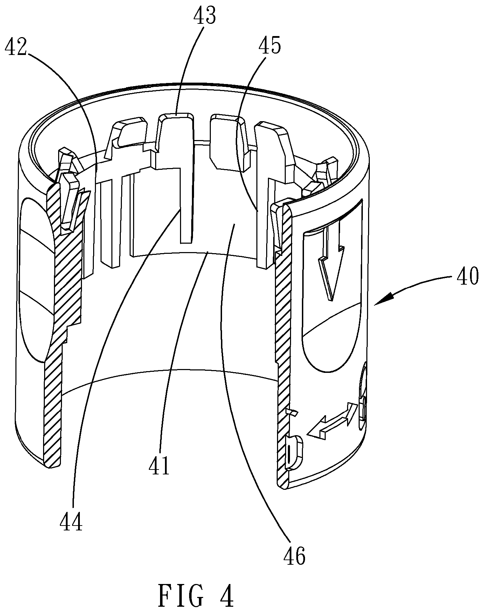

Referring further to FIGS. 1 to 3, the body 10 includes one or more than one retaining element 17 (which is a protrusion). Each retaining element 17 is defined between each limitation element 15 and each spaced orifice 16. The body 10 further includes a surround seat 18 arranged on a middle section thereof and abutting against the resilient element 30. In an embodiment, the resilient element 30 is a spring. The fitting sleeve 40 (as shown in FIG. 4) includes a fixing seat 41 formed on a middle section of an inner wall of the fitting sleeve 40 and abutting against the resilient element 30. Multiple guide zones 42 are defined by elongated ribs and correspond to the multiple spaced orifices 16 respectively, wherein the multiple guide zones 42 abut against the multiple retainers 101 individually. Multiple spaced engagement teeth 43 are defined between any two adjacent of the multiple guide zones 42 so as to be pushed by the resilient element 30 and contacts with the stop rib 13 of the body 10. And the one or more than one locking element 14 is located beside each of the multiple spaced engagement teeth 43 so that the resilient element 30 pushes the fixing seat 41 of the fitting sleeve 40 and the surround seat 18 of the body 10.

The fitting sleeve 40 further includes one or more than one elongated shoulder 44 respectively corresponding to and located above the one or more than one retaining element 17 so that the one or more than one elongated shoulder 44 moves across the one or more than one retaining element 17 when the fitting sleeve 40 is rotated. Each elongated shoulder 44 has a stopping face 45 defined on one side thereon so as to form a defining space 46, such that each limitation element 15 is located in the defining space 46 and is limited by each elongated shoulder 44 and the stopping face 45 when the fitting sleeve 40 rotates reciprocatingly. A width of each of the multiple spaced engagement teeth 43 is equal to a rotation distance of the fitting sleeve 40 in an embodiment.

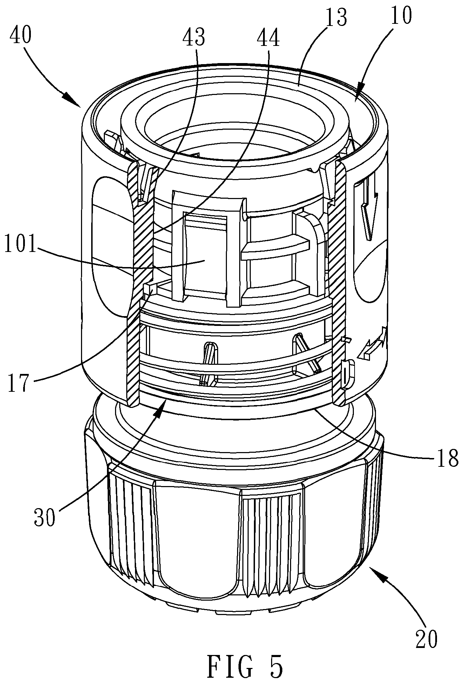

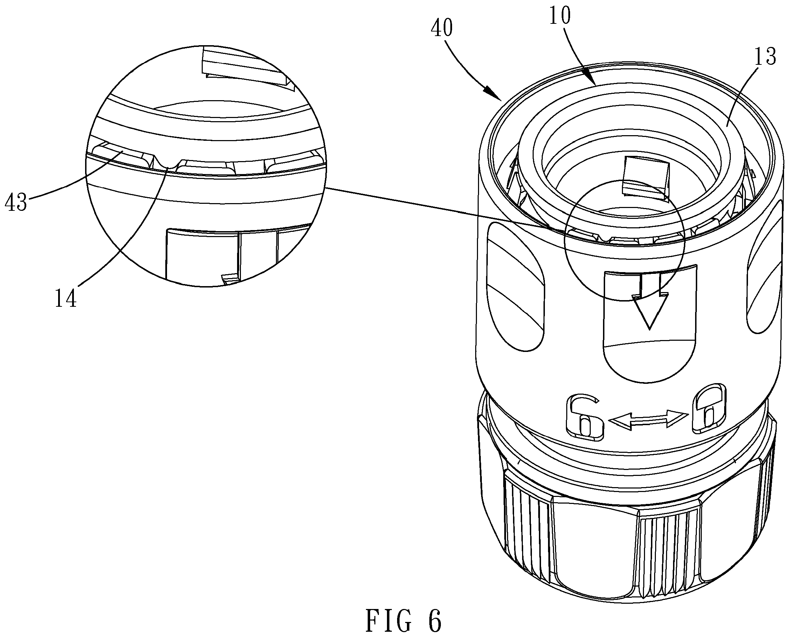

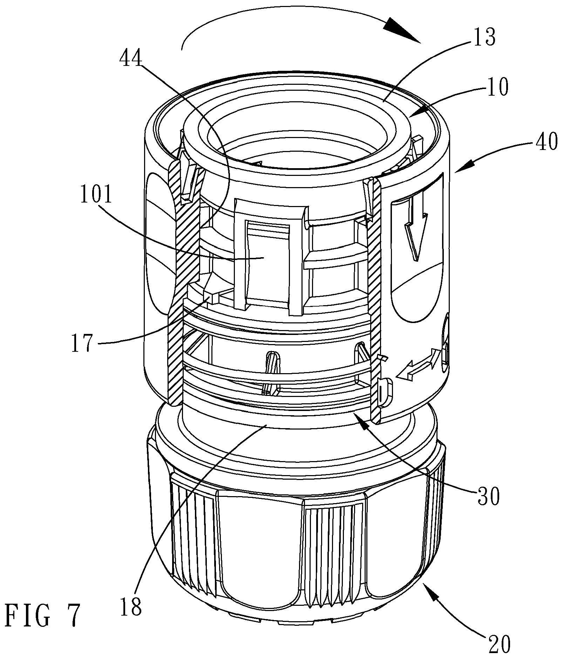

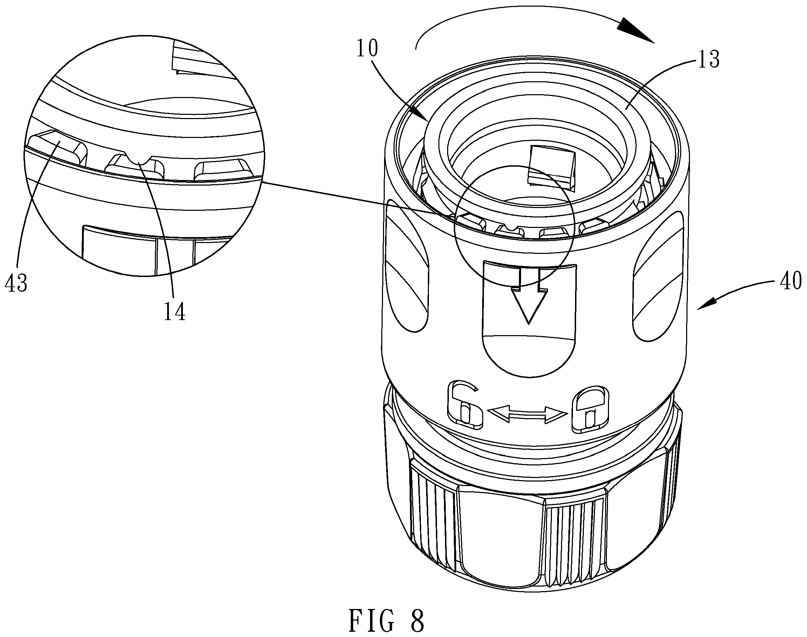

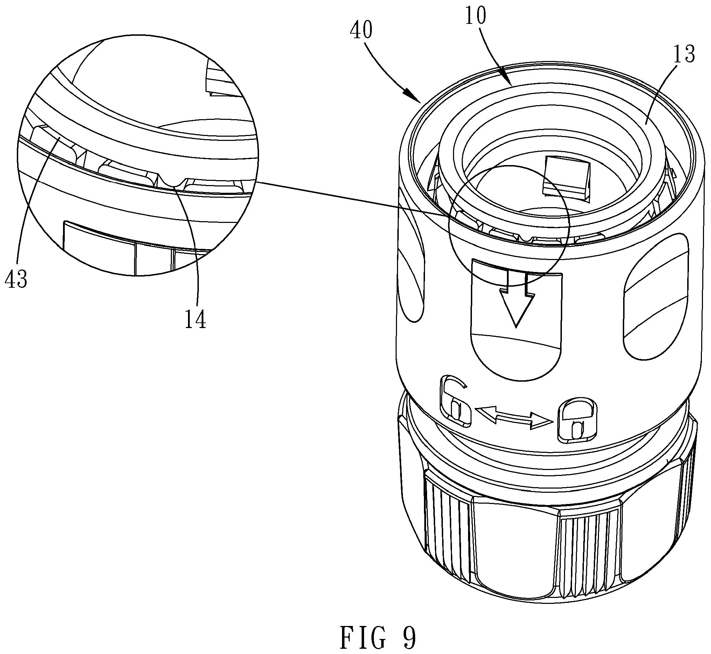

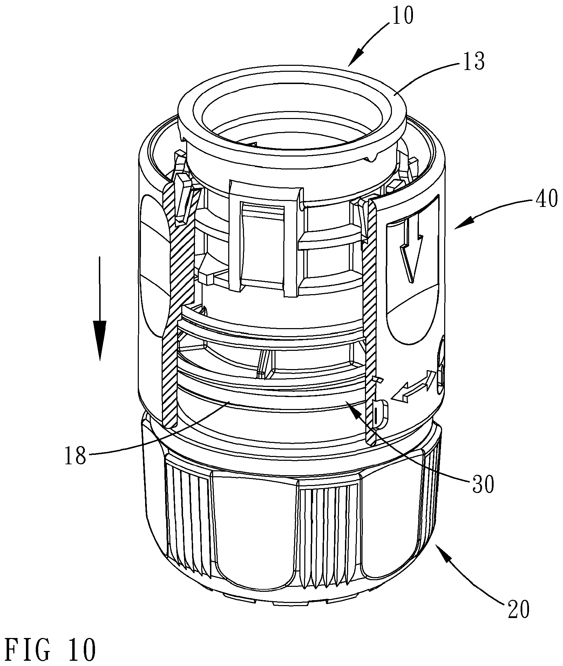

Referring to FIG. 5, when the fitting sleeve 40 is located on a closing position, each elongated shoulder 44 is located above each retaining element 17 of the body 10 so that the fitting sleeve 40 does not press each retaining element 17 while the fitting sleeve 40 is pushed by the resilient element 30 so that each spaced engagement tooth 43 is biased against the stop rib 13 of the body 10, and each locking element 14 is located on a first side of each spaced engagement tooth 43 (as illustrated in FIG. 6). In this arrangement, each limitation element 15 of the body 10 contacts with the stopping face 45 of the fitting sleeve 40 and each of the multiple retainers 101 is pushed by each of the multiple guide zones 42 so as to connect with a coupling opening of the water supply device. When the fitting sleeve 40 is rotated to an opening position (as shown in FIGS. 7 and 8), each elongated shoulder 44 moves away from each retaining element 17 so that the fitting sleeve 40 presses the resilient element 30, and each locking element 14 and each spaced engagement tooth 43 are pushed by the fitting sleeve 40 to press the resilient element 30 so that each spaced engagement tooth 43 removes from the stop rib 13 and moves along each locking element 14. When each locking element 14 moves to a second side of each spaced engagement tooth 43 (as illustrated in FIG. 9), each spaced engagement tooth 43 is not forced by each locking element 14 and is pushed by the resilient element 30 so as to urge the stop rib 13 and each locking element 14 to rotate toward the second side of each spaced engagement tooth 43. Preferably, each limitation element 15 contacts with each elongated shoulder 44 so as to maintain the fitting sleeve 40 on the opening position, and the fitting sleeve 40 (as shown in FIG. 10) and the resilient element 30 are pressed until each retainer 101 of the body 10 removes from each guide zone 42, thus removing or fixing each retainer 101 from or into the coupling opening of the water spray gun or the sprinkle. Thereby, the gardening fluid coupling device is opened or closed easily by way of the stop rib 13 and each locking element 14 of the body 10, each spaced engagement tooth 43 of the fitting sleeve 40, and the resilient element 30.

Note that the specifications relating to the above embodiments should be construed as exemplary rather than as limitative of the present invention, with many variations and modifications being readily attainable by a person of average skill in the art without departing from the spirit or scope thereof as defined by the appended claims and their legal equivalents.

Having described the invention in detail, it will be apparent that modifications and variations are possible without departing from the scope of the invention defined in the appended claims.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A gardening fluid connection device comprising:
a body (10) on which multiple retainers (101) are retained;
a resilient element (30); and
a fitting sleeve (40) fitted on a first end of the body (10), the fitting sleeve (40) including multiple spaced engagement teeth (43), the resilient element (30) abutting against the body (10) and the fitting sleeve (40), the fitting sleeve (40) rotating along the body (10) reciprocatingly and pushing the resilient element (30) so as to open or close the gardening fluid coupling device, hence the multiple retainers (101) of the body (10) are removed or retained when the fitting sleeve (40) presses the resilient element (30) or is pushed by the resilient element (30), respectively, so that the multiple retainers (101) of the body (10) connect with or remove from a water supply device, respectively;
wherein the body (10) further includes at least one retaining element (17), and
wherein the fitting sleeve (40) further includes at least one shoulder (44) respectively located above and contacting with the retaining element (17) so as to maintain the fitting sleeve (40) on a closing position and not press downward,
wherein when the fitting sleeve (40) rotates to an opening position, the shoulder (44) removing from the retaining element (17) of the body (10) so that the fitting sleeve (40) presses the resilient element (30) to release the multiple retainers (101) and the multiple retainers (101) connect with or remove from the water supply device,
**characterized in that** the body (10) includes a stop rib (13) arranged thereon so that the multiple spaced engagement teeth (43) of the fitting sleeve (40) are pushed by the resilient element (30) to abut against the stop rib (13) of the body (10), and includes at least one locking element (14) formed inside the stop rib (13), each locking element (14) being located on a side of each spaced engagement tooth (43).

2. The gardening fluid connection device as claimed in claim 1, wherein the body (10) further includes a surround seat (18) arranged on a middle section thereof, and wherein the fitting sleeve (40) includes a fixing seat (41) formed on a middle section of an inner wall thereof such that the resilient element (30) abuts against the surround seat (18) and the fixing seat (41).

3. The gardening fluid connection device as claimed in any of claims 1 to 2, wherein each retaining element (17) is a protrusion and each shoulder (44) is elongated.

4. The gardening fluid connection device as claimed in any of claims 1 to 3, wherein:
a width of each spaced engagement tooth (43) is equal to a rotation distance of the fitting sleeve (40).

5. The gardening fluid connection device as claimed in any preceding claim, wherein the resilient element (30) is a spring.

## Patentansprüche

1. Gartenbau-Flüssigkeitsverbindungseinrichtung, welche umfasst:
einen Körper (10), auf dem viele Rückhalteelemente (101) (101) zurückgehalten werden;
ein elastisches Element (30) (30); und
eine Anpasshülse (40), die auf ein erstes Ende des Körpers (10) aufgepasst ist, worin die Anpasshülse (40) viele beabstandete Eingriffszähne (43) umfasst, worin das elastische Element (30) gegen den Körper (10) und die Anpasshülse (40) aufliegt, worin sich die Anpasshülse (40) entlang des Körpers (10) vor und zurück dreht und das elastische Element (30) drückt, um die Gartenbau-Flüssigkeitsverbindungseinrichtung zu öffnen oder zu schließen, wodurch die vielen Rückhalteelemente (101) des Körpers (10) entsprechend entfernt oder zurückgehalten werden, wenn die Anpasshülse (40) das elastische Element (30) drückt oder durch das elastische Element (30) gedrückt wird, so dass sich die vielen Rückhalteelemente (101) des Körpers (10) mit einer Wasserzufuhreinrichtung entsprechend verbinden oder davon entfernt werden;
worin der Körper (10) weiter mindestens ein Rückhalteelement (17) umfasst, und
worin die Anpasshülse (40) weiter mindestens eine Schulter (44) umfasst, die entsprechend über dem Rückhalteelement (17) angeordnet ist und damit in Kontakt kommt, um die Anpasshülse (40) auf einer geschlossenen Position zu halten und nicht herab zu drücken,
wobei wenn sich die Anpasshülse (40) in eine offenen Position dreht, die Schulter (44) sich von dem Rückhalteelement (17) des Körpers (10) entfernt, so dass die Anpasshülse (40) das elastische Element (30) drückt, um die vielen Rückhalteelemente (101) freizugeben und sich die vielen Rückhalteelemente (101) der Wasserzufuhreinrichtung verbinden oder sich davon entfernen;
**dadurch gekennzeichnet, dass**
der Körper (10) eine Stopprippe (13) umfasst, die derart darauf angeordnet ist, dass die vielen beabstandeten Eingriffszähne (43) der Anpasshülse (40) durch das elastische Element (30) gedrückt werden, um gegen die Stopprippe (13) des Körpers (10) aufzuliegen, und der Körper mindestens ein Blockierelement (14) umfasst, das in der Stopprippe (13) ausgebildet ist, worin jedes Blockierelement (14) auf einer Seite jedes beabstandeten Eingriffszahns (43) angeordnet ist.

2. Gartenbau-Flüssigkeitsverbindungseinrichtung nach Anspruch 1, worin der Körper (10) weiter einen Einfassungssitz (18) umfasst, der auf einem Mittelabschnitt vorgesehen ist, und worin die Anpasshülse (40) einen Befestigungssitz (41) umfasst, der auf einem Mittelabschnitt einer inneren Wand ausgebildet ist, so dass das elastische Element (30) gegen den Einfassungssitz (18) und den Befestigungssitz (41) aufliegt.

3. Gartenbau-Flüssigkeitsverbindungseinrichtung nach einem der Ansprüche 1 bis 2, worin jedes Rückhalteelement (17) eine Hervorwölbung und jede Schulter (44) länglich ist.

4. Gartenbau-Flüssigkeitsverbindungseinrichtung nach einem der Ansprüche 1 bis 3, worin eine Breite jedes beabstandeten Eingriffszahns (43) gleich einer Rotationsdistanz der Anpasshülse (40) ist.

5. Gartenbau-Flüssigkeitsverbindungseinrichtung nach einem der vorstehenden Ansprüche, worin das elastische Element (30) eine Feder ist.

## Revendications

1. Dispositif de raccordement de fluide de jardinage comprenant :
un corps (10) sur lequel de multiples éléments de retenue (101) sont retenus ;
un élément élastique (30) ; et
un manchon de montage (40) monté sur une première extrémité du corps (10), le manchon de montage (40) comprenant de multiples dents espacées de mise en prise (43), l'élément élastique (30) venant en butée contre le corps (10) et le manchon de montage (40), le manchon de montage (40) tournant le long du corps (10) en va-et-vient et poussant l'élément élastique (30) de façon à ouvrir ou fermer le dispositif de raccordement de fluide de jardinage, ainsi les multiples éléments de retenue (101) du corps (10) sont retirés ou retenus lorsque le manchon de montage (40) respectivement presse l'élément élastique (30) ou est poussé par l'élément élastique (30), de telle sorte que les multiples éléments de retenue (101) du corps (10) respectivement se raccordent à un dispositif d'alimentation en eau ou se retirent de celui-ci ;
le corps (10) comprenant en outre au moins un élément de retenue (17) et
le manchon de montage (40) comprenant en outre au moins un épaulement (44) respectivement situé au-dessus et en contact avec l'élément de retenue (17) de façon à maintenir le manchon de montage (40) sur une position de fermeture et ne pas appuyer vers le bas,
où, lorsque le manchon de montage (40) tourne vers une position d'ouverture, l'épaulement (44) se retire de l'élément de retenue (17) du corps (10) de telle sorte que le manchon de montage (40) presse l'élément élastique (30) pour libérer les multiples éléments de retenue (101) et les multiples éléments de retenue (101) se raccordent au dispositif d'alimentation en eau ou se retirent de celui-ci,
**caractérisé en ce que**
le corps (10) comprend une nervure d'arrêt (13) agencée sur celui-ci de telle sorte que les multiples dents espacées de mise en prise (43) du manchon de montage (40) sont poussées par l'élément élastique (30) pour venir en butée contre la nervure d'arrêt (13) du corps et comprend au moins un élément de verrouillage (14) formé à l'intérieur de la nervure d'arrêt (13), chaque élément de verrouillage (14) étant situé sur un côté de chaque dent espacée de mise en prise (43).

2. Dispositif de raccordement de fluide de jardinage selon la revendication 1, le corps (10) comprenant en outre un siège périphérique (18) agencé sur une section médiane correspondante et le manchon de montage (40) comprenant un siège de fixation (41) formé sur une section centrale d'une paroi interne correspondante de telle sorte que l'élément élastique (30) vient en butée contre le siège périphérique (18) et le siège de fixation (41).

3. Dispositif de raccordement de fluide de jardinage selon l'une quelconque des revendications 1 à 2, chaque élément de retenue (17) étant une saillie et chaque épaulement (44) étant allongé.

4. Dispositif de raccordement de fluide de jardinage selon l'une quelconque des revendications 1 à 3 :
une largeur de chaque dent espacée de mise en prise (43) étant égale à une distance de rotation du manchon de montage (40).

5. Dispositif de raccordement de fluide de jardinage selon l'une quelconque revendication précédente, l'élément élastique (30) étant un ressort.
